# FASCICULE DE BREVET EUROPEEN

(11) **EP 1 484 346 B1**
(45) Date de publication et mention de la délivrance du brevet: **02.05.2012**
(21) Numéro de dépôt: 04291316.0
(22) Date de dépôt: 25.05.2004
(51) Int. Cl.: C08F 259/08, B32B 27/28

(54) **Procédé de greffage de polymère fluoré et structures multicouches comprenant ce polymère greffé**
Verfahren zur Pfropfung von Fluorpolymeren und Schichtverbundmaterial daraus
Process for the preparation or fluorinated graft copolymers and multilayer structures thereof

(30) Priorité: 06.06.2003 FR 0306844; 24.06.2003 FR 0307597
(43) Date de publication de la demande: 08.12.2004
(73) Titulaire: ARKEMA FRANCE, 92700 Colombes (FR)
(72) Inventeur: Bonnet, Anthony, 27170 Beaumont le Roger (FR); Ramfel, Barbara, 91310 Longpont sur Orge (FR); Chopinez, Fabrice, 27000 Evreux (FR); Triballier, Karine, 27800 Saint Eloi de Fourques (FR); Werth, Michael, 27300 Bernay (FR); Pascal, Thierry, 69390 Charly (FR)

(56) Documents cités:
- EP-A- 0 650 987
- EP-A- 1 260 747
- US-A- 4 151 225
- US-B2- 6 552 099

## Description

### Domaine de l'invention

Les polymères fluorés, par exemple ceux à base de fluorure de vinylidène CF2=CH2 (VDF) tels que le PVDF (polyfluorure de vinylidène) sont connus pour offrir d'excellentes propriétés de stabilité mécanique, une très grande inertie chimique, ainsi qu'une bonne résistance au vieillissement. Ces qualités sont exploitées pour des domaines d'application variés. On citera par exemple, la fabrication de pièces extrudées ou injectées pour l'industrie du génie chimique ou la microélectronique, l'utilisation sous forme de gaine d'étanchéité pour le transport des gaz ou des hydrocarbures, l'obtention de films ou de revêtements permettant la protection dans le domaine architectural, et la réalisation d'éléments protecteurs pour des usages électrotechniques.

Cependant cette inertie chimique des polymères fluorés fait qu'il est difficile de les coller ou de les associer à d'autres matériaux. La présente invention décrit un procédé dans lequel on fixe une fonction réactive sur un polymère fluoré. Ce polymère fluoré ainsi modifié peut être plus facilement collé ou associé à d'autres matériaux. Le procédé de l'invention consiste à mélanger à l'état fondu le polymère fluoré et le monomère fonctionnel qu'on veut greffer sur ledit polymère fluoré puis le mélange obtenu se présentant sous forme divisée telle que des granulés est irradié pour obtenir le greffage du monomère fonctionnel sur le polymère fluoré.

### L'art antérieur et le problème technique

Le brevet EP 214880 décrit un procédé de fabrication de copolymères de polyfluorure de vinylidène par greffage d'un monomère sur le polyfluorure de vinylidène au moyen de rayonnements ionisants et qui comprend les étapes successives suivantes:
a) - immerger une poudre ou un film de polyfluorure de vinylidène dans une solution d'un monomère choisi dans le groupe comprenant l'acrylamide, le styrène, le méthylstyrène, l'allylglycidyl éther, la vinyl-2 pyridine, la vinyl-4 pyridine, la méthyl-2 vinyl-5 pyridine, les acrylate et méthacrylate de diméthylaminoéthyle, les acrylate et méthacrylate de diméthylaminopropyle, les acrylate et méthacrylate de diéthylaminoéthyle, les acrylate et méthacrylate de diéthylaminopropyle, la diméthylaminopropyl méthacrylamide, la N-vinyl pyrrolidone, la N-vinyl caprolactone, les acyloxy et hydroxystyrènes, l'acide vinyl sulfonique et ses dérivés, l'acide acrylique et l'acide méthacrylique, pour imprégner dudit monomère la poudre ou le film de polyfluorure de vinylène,
b) - irradier la poudre ou le film imprégné au moyen de rayonnements ionisants, en l'absence d'oxygène, et
c) - soumettre ensuite le copolymère greffé obtenu à une réaction chimique pour lui conférer un caractère ionique lorsque le monomère greffé n'a pas de caractère ionique.

La demande de brevet WO 0017889 décrit des revêtements de câbles électriques comprenant successivement une couche constituée d'un terpolymère éthylène-acrylate d'alkyle-anhydride maléique et une couche d'un copolymère fluoré VDF/HFP. Pour améliorer l'adhérence de ces couches on soumet l'ensemble à des radiations ionisantes.

Le brevet US 5576106 décrit un procédé pour greffer un monomère fonctionnel insaturé sur la surface d'un polymère fluoré en poudre. On mélange de l'anhydride maléique en poudre et le polymère fluoré puis on les met dans un sac en polyéthylène et après avoir chassé l'air contenu dans le sac on soumet le sac contenant le mélange de poudre à une irradiation comprise entre 3 et 6 Mrad. Selon une variante l'anhydride maléique est dissous dans l'acétone puis on mélange l'ensemble avec le polymère fluoré en poudre et ensuite on évapore l'acétone. On irradie ensuite comme ci dessus. Le polymère fluoré greffé est ensuite utilisé dans des structures multicouches. Dans tous les exemples on n'utilise que des élastomères fluorés. Le document EP 650987 décrit le greffage d'un monomère insaturé sur un polymère flusié en présence de composés générateurs de radicaux libres.

Les forces de pelage entre une couche de polymère fluoré greffé selon ces arts antérieurs et un autre matériau sont insuffisantes pour de nombreuses applications en particulier dans les structures comprenant des polyoléfines.

On a maintenant trouvé que si on mélange à l'état fondu le polymère fluoré et le monomère fonctionnel qu'on veut greffer sur ledit polymère fluoré puis qu'on soumet le mélange obtenu se présentant soit sous forme divisée telle que des granulés soit sous forme de film ou de plaque à une irradiation on obtient un greffage dans la masse du polymère fluoré. Ce polymère fluoré greffé utilisé dans des structures multicouches permet d'obtenir de très bonnes forces de pelage.

### Brève description de l'invention

La présente invention concerne un procédé de greffage d'un monomère insaturé sur un polymère fluoré dans lequel :
a) on mélange le polymère fluoré à l'état fondu avec le monomère insaturé,
b) le mélange obtenu en a) est mis sous forme de films, de plaques, de granulés ou de poudre,
c) les produits de l'étape b) sont soumis, en l'absence d'air, à une irradiation photonique (γ) ou électronique (β) sous une dose comprise entre 1 et 15 Mrad,
d) le produit obtenu en c) est éventuellement traité pour éliminer tout ou partie du monomère insaturé qui n'a pas été greffé sur le polymère fluoré.

Le polymère fluoré greffé ainsi obtenu peut être utilisé tel quel ou en mélange soit avec le même polymère fluoré mais non greffé soit avec un autre polymère fluoré soit avec un autre polymère tel que par exemple un polymère acrylique. A titre d'exemple de polymère acrylique on peut citer le PMMA et les modifiants choc de type core shell (coeur écorce).

L'invention concerne aussi des structures comprenant au moins une couche de ce polymère fluoré greffé et au moins une couche d'un autre matériau.

L'invention concerne aussi l'utilisation de ces structures pour obtenir un effet barrière.

Ces structures sont barrière à de nombreux fluides et en particulier à l'essence et aux fluides dé climatisation.

Ces structures peuvent se mettre sous forme de bouteilles, réservoirs, conteneurs, tuyaux et récipients de toute sorte. Elles peuvent aussi être transformées en films avec lesquels on fait des emballages.

L'utilisation conjointe d'un polymère fluoré imperméable aux fluides apolaires et d'une polyoléfine imperméable aux fluides polaires est particulièrement intéressante car elle permet d'obtenir une barrière très efficace aux essences contenant des liquides comme le M15 ( iso-octane 42,5%, toluène 42,5% et méthanol 15% en volume) ou le TF1 (45% toluène, 45% iso-octane et 10% éthanol)

L'invention concerne aussi des structures dans lesquelles le polymère fluoré est utilisé pour protéger des substrats.

Dans les structures précédentes le polymère fluoré greffé peut être utilisé seul ou en mélange comme cité plus haut.

L'invention concerne aussi le polymère fluoré greffé dans la masse. Elle concerne le polymère fluoré greffé dans la masse en mélange soit avec le même polymère fluoré mais non greffé soit avec un autre polymère fluoré soit avec un autre polymère tel que par exemple un polymère acrylique. A titre d'exemple de polymère acrylique on peut citer le PMMA et les modifiants choc de type core shell (coeur écorce).

### Description détaillée de l'invention

**S'agissant du polymère fluoré** on désigne ainsi tout polymère ayant dans sa chaîne au moins un monomère choisi parmi les composés contenant un groupe vinyle capable de s'ouvrir pour se polymériser et qui contient, directement attaché à ce groupe vinyle, au moins un atome de fluor, un groupe fluoroalkyle ou un groupe fluoroalkoxy.

A titre d'exemple de monomère on peut citer le fluorure de vinyle; le fluorure de vinylidène (VDF); le trifluoroethylene (VF3); le chlorotrifluoroethylene (CTFE); le 1,2-difluoroethylene; le tetrafluoroethylene (TFE); l'hexafluoropropylene (HFP); les perfluoro(alkyl vinyl) ethers tels que le perfluoro(methyl vinyl)ether (PMVE), le perfluoro(ethyl vinyl) ether (PEVE) et le perfluoro(propyl vinyl) ether (PPVE); le perfluoro( 1,3 -dioxole); le perfluoro(2,2-dimethyl- 1,3 -dioxole) (PDD); le produit de formule CF2=CFOCF2CF(CF3)OCF2CF2X dans laquelle X est SO2F, CO2H, CH2OH, CH2OCN ou CH20PO3H; le produit de formule CF2=CFOCF2CF2SO2F; le produit de formule F(CF2)nCH20CF=CF2 dans laquelle n est 1, 2, 3, 4 or 5; le produit de formule R1CH2OCF=CF2 dans laquelle R1 est l'hydrogene ou F(CF2)z et z vaut 1, 2, 3 ou 4; le produit de formule R30CF=CH2 dans laquelle R3 est F(CF2)z- et z est 1, 2, 3 or 4; le perfluorobutyl ethylene (PFBE); le 3,3,3-trifluoropropene et le 2-trifluoromethyl-3 ,3 ,3 -trifluoro- 1 -propene.

Le polymère fluoré peut être un homopolymère ou un copolymère, il peut aussi comprendre des monomères non fluorés tels que l'éthylène.

A titre d'exemple le polymère fluoré est choisi parmi :
- Les homo- et copolymères du fluorure de vinylidène (VDF) contenant de préférence au moins 50% en poids de VDF, le copolymère étant choisi parmi le chlorotrifluoroéthylène (CTFE), l'hexafluoropropylène (HFP), le trifluoroéthylène (VF3) et le tétrafluoroéthylène (TFE),
- Les homo- et copolymères du trifluoroéthylène (VF3),
- Les copolymères, et notamment terpolymères, associant les restes des motifs chlorotrifluoroéthylène (CTFE), tétrafluoroéthylène (TFE), hexafluoropropylène (HFP) et/ou éthylène et éventuellement des motifs VDF et/ou VF3.
- On peut encore citer les copolymères de l'éthylène et du tetrafluoroethylene (ETFE).

Avantageusement le polymère fluoré est du poly(fluorure de vinylidène) (PVDF) homopolymère ou copolymère. De préférence le PVDF contient, en poids, au moins 50% de VDF, plus préférentiellement au moins 75% et mieux encore au moins 85%. Le comonomère est avantageusement l'HFP.

Avantageusement, le PVDF a une viscosité allant de 100 Pa.s à 2000 Pa.s, la viscosité étant mesurée à 230°C, à un gradient de cisaillement de 100 s⁻¹ à l'aide d'un rhéomètre capillaire. En effet, ces PVDF sont bien adaptés à l'extrusion et a l'injection. De préférence, le PVDF a une viscosité allant de 300 Pa.s à 1200 Pa.s, la viscosité étant mesurée à 230°C, à un gradient de cisaillement de 100s⁻¹ à l'aide d'un rhéomètre capillaire.

Ainsi, les PVDF commercialisés sous la marque KYNAR^{®} 710 ou 720 sont parfaitement adaptés pour cette formulation.

**S'agissant du monomère insaturé de greffage** à titre d'exemples on peut citer les acides carboxyliques et leurs dérivés, les chlorures d'acides, les isocyanates, les oxazolines, les époxydes, les amines ou les hydroxydes.

Des exemples d'acides carboxyliques insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés. On peut encore citer l'acide undécylènique.

Des acides dicarboxyliques insaturés ayant 4 à 10 atomes de carbone et leurs dérivés fonctionnels, particulièrement leurs anhydrides, sont des monomères de greffage particulièrement préférés.

Ces monomères de greffage comprennent par exemple les acides maléique, fumarique, itaconique, citraconique, allylsuccinique, cyclohex-4-ène-1,2-dicarboxylique, 4-méthyl-cyclohex-4-ène-1,2-dicarboxylique, bicyclo(2,2,1)hept-5-ène-2,3-dicarboxylique, x-méthylbicyclo(2,2,1-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2, 1)hept-5-ène-2,2-dicarboxylique.

Des exemples d'autres monomères de greffage comprennent des esters alkyliques en C₁-C₈ ou des dérivés esters glycidyliques des acides carboxyliques insaturés tels que acrylate de méthyle, méthacrylate de méthyle, acrylate d'éthyle, méthacrylate d'éthyle, acrylate de butyle, méthacrylate de butyle, acrylate de glycidyle, méthacrylate de glycidyle, maléate de mono-éthyle, maléate de diéthyle, fumarate de monométhyle, fumarate de diméthyle, itaconate de monométhyle, et itaconate de diéthyle ; des dérivés amides des acides carboxyliques insaturés tels que acrylamide, méthacrylamide, monoamide maléique, diamide maléique, N-monoéthylamide maléique, N,N-diéthylamide maléique, N-monobutylamide maléique, N,N-dibutylamide maléique, monoamide furamique, diamide furamique, N-monoéthylamide fumarique, N,N-diéthylamide fumarique, N-monobutylamide fumarique et N,N-dibutylamide furamique ; des dérivés imides des acides carboxyliques insaturés tels que maléimide, N-butylmaléimide et N-phénylmaléimide; et des sels métalliques d'acides carboxyliques insaturés tels que acrylate de sodium, méthacrylate de sodium, acrylate de potassium, et méthacrylate de potassium.

Avantageusement on utilise l'anhydride maléique.

L'étape a) s'effectue dans tout dispositif de mélange tel que des extrudeuses ou des malaxeurs utilisés dans l'industrie des thermoplastiques.

S'agissant des proportions du polymère fluoré et du monomère insaturé ) la proportion de polymère fluoré est avantageusement, en poids, de 90 à 99,9% pour respectivement 0,1 à 10% de monomère insaturé. De préférence la proportion de polymère fluoré est de 95 à 99,9% pour respectivement 0,1 à 5% de monomère insaturé.

A l'issue de l'étape a) on constate que le mélange du polymère fluoré et du monomère insaturé a perdu environ de 10 à 50% du monomère insaturé qu'on avait introduit au début de l'étape a). Cette proportion dépend de la volatilité et de la nature du monomère insaturé. En fait le monomère a été dégazé dans l'extrudeuse ou le mélangeur et il est recupéré dans les circuits d'évents.

S'agissant de l'étape c) les produits récupérés à l'issue de l'étape b) sont avantageusement conditionnés en sacs de polyéthylène et l'air est chassé puis ils sont fermés. Quant à la méthode d'irradiation, on pourra utiliser sans distinction l'irradiation électronique plus connue sous la dénomination irradiation béta et l'irradiation photonique plus connue sous la dénomination irradiation gamma. Avantageusement la dose est comprise entre 2 et 6 Mrad et de préférence entre 3 et 5 Mrad.

S'agissant de l'étape d) on peut éliminer par tout moyen le monomère non greffé. La proportion de monomère greffé par rapport au monomère présent au début de l'étape c) est comprise entre 50 et 100%. On peut laver avec des solvants inertes vis à vis du polymère fluoré et des fonctions greffées. Par exemple quand on greffe de l'anhydride maléique on peut laver au chlorobenzene. On peut aussi plus simplement degazer en mettant sous vide le produit récupéré à l'étape c).

L'invention concerne aussi des structures. A titre d'exemple de structures selon l'invention on peut citer celle comprenant successivement :
Une couche intérieure en contact avec le fluide à transporter ou a stocker constituée du polymère fluoré greffé selon l'invention et directement attachée à celle ci soit une couche extérieure de polyoléfine soit une couche de polyoléfine et une couche extérieure de polyamide. Un liant peut être disposé entre la couche de polyoléfine et la couche de polyamide. Cette structure est utile pour des réservoirs d'essence pour les automobiles. Selon une variante cette structure comprend une couche de polymère fluoré, de préférence du PVDF (ou de l'ETFE), disposée du coté du polymère fluoré greffé. C'est à dire que la structure comprend successivement une couche de polymère fluoré, de préférence du PVDF (ou de l'ETFE), une couche constituée du polymère fluoré greffé selon l'invention et directement attachée à celle ci soit une couche extérieure de polyoléfine soit une couche de polyoléfine et une couche extérieure de polyamide. La couche de polymère fluoré greffé est une couche de liant entre la couche de PVDF (ou d'ETFE) et la couche de polyoléfine. Selon une autre variante la couche de polymère fluoré greffé est en mélange soit avec le même polymère fluoré mais non greffé soit avec un autre polymère fluoré soit avec un autre polymère tel que par exemple un polymère acrylique. A titre d'exemple de polymère acrylique on peut citer le PMMA et les modifiants choc de type core shell (coeur écorce).

Dans les structures précédentes on peut disposer entre la couche de polymère fluoré greffé et la couche de polyoléfine une couche de polyoléfine fonctionnalisée ayant des fonctions capables de réagir avec les fonctions greffées sur le polymère fluoré. Par exemple si on a greffé de l'anhydride maléique sur le polymère fluoré la couche de polyoléfine fonctionnalisée est constituée d'un copolymère de l'éthylène, du méthacrylate de glycidyle et éventuellement d'un acrylate d'alkyle éventuellement en mélange avec du polyéthylène.

Dans les structures précédentes la couche intérieure en contact avec le fluide à transporter ou a stocker peut contenir du noir de carbone, des nanotubes de carbone ou tout autre additif capable de la rendre conductrice pour éviter l'accumulation d'électricité statique.

A titre d'exemple de structures selon l'invention on peut citer celle comprenant successivement :
Une couche constituée du polymère fluoré greffé selon l'invention disposée entre 2 couches de polyoléfine. Cette structure est utile pour des réservoirs d'essence pour les automobiles.

Dans les structures précédentes on peut disposer entre la couche de polymère fluoré greffé et l'une ou les 2 couches de polyoléfine une couche de polyoléfine fonctionnalisée ayant des fonctions capables de réagir avec les fonctions greffées sur le polymère fluoré. Par exemple si on a greffé de l'anhydride maléique sur le polymère fluoré la couche de polyoléfine fonctionnalisée est constituée d'un copolymère de l'éthylène, du méthacrylate de glycidyle et éventuellement d'un acrylate d'alkyle éventuellement en mélange avec du polyéthylène. Selon une variante la couche de polymère fluoré greffé est en mélange soit avec le même polymère fluoré mais non greffé soit avec un autre polymère fluoré soit avec un autre polymère tel que par exemple un polymère acrylique. A titre d'exemple de polymère acrylique on peut citer le PMMA et les modifiants choc de type core shell (coeur écorce).

A titre d'autre exemple de structures selon l'invention on peut citer celle comprenant successivement :
Une couche intérieure en contact avec le fluide à transporter ou a stocker constituée du polymère fluoré greffé selon l'invention et directement attachée à celle ci une couche extérieure de polyamide. Cette structure est utile pour des tuyaux d'essence pour les automobiles. Selon une variante cette structure comprend une couche de polymère fluoré, de préférence du PVDF (ou de l'ETFE), disposée du coté du polymère fluoré greffé. C'est à dire que la structure comprend successivement une couche de polymère fluoré, de préférence du PVDF (ou de l'ETFE), une couche constituée du polymère fluoré greffé selon l'invention et directement attachée à celle ci une couche extérieure de polyamide. La couche de polymère fluoré greffé est une couche de liant entre la couche de PVDF (ou d'ETFE) et la couche de polyamide. Selon une autre variante la couche de polymère fluoré greffé est en mélange soit avec le même polymère fluoré mais non greffé soit avec un autre polymère fluoré soit avec un autre polymère tel que par exemple un polymère acrylique. A titre d'exemple de polymère acrylique on peut citer le PMMA et les modifiants choc de type core shell (coeur écorce).

Selon une autre forme la structure de l'invention comprend une couche constituée du polymère fluoré greffé selon l'invention disposée entre 2 couches de polyamide. Cette structure est utile comme tuyau d'essence. Selon une forme avantageuse la couche de polymère fluoré greffé est en mélange soit avec le même polymère fluoré mais non greffé soit avec un autre polymère fluoré soit avec un autre polymère tel que par exemple un polymère acrylique. A titre d'exemple de polymère acrylique on peut citer le PMMA et les modifiants choc de type core shell (coeur écorce).

Dans les structures précédentes on peut disposer entre la couche de polymère fluoré greffé et la couche de polyamide une couche de polymère fonctionnalisé ayant des fonctions capables de réagir avec les fonctions greffées sur le polymère fluoré ce polymère fonctionnalisé étant compatible avec le polyamide.

Dans les structures précédentes la couche intérieure en contact avec le fluide à transporter ou a stocker peut contenir du noir de carbone, des nanotubes de carbone ou tout autre additif capable de la rendre conductrice pour éviter l'accumulation d'électricité statique.

A titre d'autre exemple de structures selon l'invention on peut citer celle comprenant successivement :
une couche extérieure du polymère fluoré greffé de l'invention et directement attachée à celle ci une couche d'un substrat. La couche de polymère fluoré greffé est utilisée comme couche de protection du substrat. Le substrat peut être un élément de la carrosserie d'une automobile ou un élément d'architecture. Selon une variante cette structure comprend une couche de polymère fluoré, de préférence du PVDF, disposée du coté du polymère fluoré greffé. C'est à dire que la structure comprend successivement une couche de polymère fluoré, de préférence du PVDF, une couche constituée du polymère fluoré greffé selon l'invention et directement attachée à celle ci la une couche d'un substrat. La couche de polymère fluoré greffé est une couche de liant entre la couche de PVDF et la couche de substrat. Selon une variante la couche de polymère fluoré greffé est en mélange soit avec le même polymère fluoré mais non greffé soit avec un autre polymère fluoré soit avec un autre polymère tel que par exemple un polymère acrylique. A titre d'exemple de polymère acrylique on peut citer le PMMA et les modifiants choc de type core shell (coeur écorce).

Dans les structures précédentes on peut disposer entre la couche de polymère fluoré greffé et la couche de substrat une couche de polymère fonctionnalisé ayant des fonctions capables de réagir avec les fonctions greffées sur le polymère fluoré ce polymère étant compatible avec le substrat.

Le polymère fluoré greffé ou le PVDF utilisé en couche de protection d'un substrat peut contenir les additifs habituels anti UV et /ou les charges absorbantes de rayonnement.

Ces structures peuvent être fabriquées par les techniques habituelles telles que l'extrusion, la coextrusion, la coextrusion soufflage, l'enduction, l'extrusion couchage.

L'invention concerne aussi le polymère fluoré greffé dans la masse.

### Les exemples

On a utilisé le polymère fluoré suivant :
**Kyna**r® **720** : PVDF homopolymère de la société ATOFINA et de MVI (Melt Volume Index ou indice de fluidité en volume à l'état fondu) 10 cm³/10 min (230°C , 5kg).

### Exemple 1 : (selon l'invention)

On prépare un mélange de PVDF kynar 720 de la société ATOFINA et de 2% en masse d'anhydride maléique. Ce mélange est préparé en utilisant une extrudeuse bi vis à 230°C et 150 tr/minute à un débit de 10 kg/h. Après l'étape d'extrusion 1,8% d'anhydride maléique reste dans le produit. Le reste étant perdu lors de l'étape d'extrusion. Le produit ainsi préparé et ensaché dans des sacs étanches en aluminium. Ces sacs sont ensuite irradiés sous 3 Mrad. Un taux de greffage de 40 % est déterminé, ce taux est vérifié après une étape de solubilisation précipitation. Le produit PVDF g AM (PVDF greffé par l'anhydride maléique) est alors placé sous vide pendant une nuit à 130°C pour évacuer l'anhydride maléique résiduel et l'acide fluorhydrique libéré lors de l'irradiation.

Une structure tricouche est réalisée par compression à 220°C sous 1 bar d'une couche A PVDF g AM (épaisseur 500 µm) collée sur une couche B d'un mélange de (i) 50% en poids de Lotader® 8840 (épaisseur 100 µm) qui est un copolymère de l'éthylène et du méthacrylate de glycidyle de MFI 5 g/10min à 190°C sous 2, 16 kg ( 92% d'éthylène et 8% de méthacrylate de glycidyle en poids) et (ii) 50% de polyéthylène stamylex® 1016 F (LLDPE de MFI 1,1 g/10min à 190°C sous 2, 16 kg) lui-même collé sur une couche C consitutée de PE Haute densité MS201 N ( densité 0,950 MFI 8 g/10min à 190°C sous 2, 16 kg) (épaisseur 500 µm).

A t=0 une adhésion de 30 N/cm est mesurée à l'interface A/B et l'interface B/C n'est pas pelable. La structure est immergée dans de l'essence M15 à 60°C. Après 15 jours la structure ne présente aucune délamination et une force de 15 N/cm est mesurée à l'interface A/B. Après séchage 1 semaine à 60°C sous vide de la structure A/B/C la force de pelage entre A et B est de nouveau mesurée à 30N/cm.

### Exemple 2 : (comparatif)

On prépare un mélange de PVDF kynar 720 de la société ATOFINA et de 2% en masse d'anhydride maléique. Ce mélange est préparé en utilisant une extrudeuse bi vis à 230°C et 150 tr/minute à un débit de 10 kg/h. Après l'étape d'extrusion 1,8% d'anhydride maléique reste dans le produit. Le reste étant perdu lors de l'étape d'extrusion. Le produit ainsi préparé et ensaché dans des sacs étanches en aluminium.

Une structure tricouche est réalisée par compression à 220°C sous 1 bar d'une couche A PVDF + AM (épaisseur 500 µm) collée sur une couche B d'un mélange de (i) 50% en poids de Lotader® 8840 (épaisseur 100 µm) qui est un copolymère de l'éthylène et du méthacrylate de glycidyle de MFI 5 g/10min à 190°C sous 2, 16 kg ( 92% d'éthylène et 8% de méthacrylate de glycidyle en poids) et (ii) 50% de polyéthylène stamylex® 1016 F lui-même collé sur une couche C consitutée de PE Haute densité MS201 N (épaisseur 500 µm).

A t=0 une adhésion de 1 N/cm est mesurée à l'interface A/B et l'interface B/C n'est pas pelable. La structure est immergée dans de l'essence M15 à 60°C. Après 15 jours la structure présente une délamination à l'interface A/B.

### Exemple 3 : (selon l'invention)

On prépare un mélange de PVDF KYNAR 720 de la société ATOFINA et de 0,5% en masse d'anhydride maléique. Ce mélange est préparé en utilisant une extrudeuse bi vis à 230°C et 150 tr/minute à un débit de 10 kg /h. Après l'étape d'extrusion 0,45% d'anhydride maléique reste dans le produit. Le reste étant perdu lors de l'étape d'extrusion. Le produit ainsi préparé et ensaché dans des sacs étanches en aluminium. Ces sacs sont ensuite irradiés sous 3 Mrad. Un taux de greffage de 50 % est déterminé, ce taux est vérifié après une étape de solubilisation précipitation. Le produit PVDF g AM est alors placé sous vide pendant une nuit à 130°C pour évacuer l'anhydride maléique résiduel et l'acide fluorhydrique libéré lors de l'irradiation.

Une structure tricouche est réalisée par compression à 220°C sous 1 bar d'une couche A PVDF g AM (épaisseur 500 µm) collée sur une couche B d'un mélange de (i) 50% en poids de Lotader® 8840 (épaisseur 100 µm) qui est un copolymère de l'éthylène et du méthacrylate de glycidyle de MFI 5 g/10min à 190°C sous 2, 16 kg ( 92% d'éthylène et 8% de méthacrylate de glycidyle en poids) et (ii) 50% de polyéthylène stamylex® 1016 F lui-même collé sur une couche C consitutée de PE Haute densité MS201 N (épaisseur 500 µm).

A t=0 une adhésion de 25 N/cm est mesurée à l'interface A/B et l'interface B/C n'est pas pelable. La structure est immergée dans de l'essence M15 à 60°C. Après 15 jours la structure ne présente aucune délamination et une force de 14 N/cm est mesurée à l'interface A/B. Après séchage 1 semaine à 60°C sous vide de la structure A/B/C la force de pelage entre A et B est de nouveau mesurée à 25 N/cm.

### Exemple 4 : (selon l'invention)

On prépare un mélange de PVDF kynar 720 de la société ATOFINA et de 2% en masse d'anhydride maléique. Ce mélange est préparé en utilisant une extrudeuse bi vis à 230°C et 150 tr/minute à un débit de 10 kg /h. Après l'étape d'extrusion 1,8% d'anhydride maléique reste dans le produit. Le reste étant perdu lors de l'étape d'extrusion. Le produit ainsi préparé et ensaché dans des sacs étanches en aluminium. Ces sacs sont ensuite irradiés sous 3 Mrad. Un taux de greffage de 40 % est déterminé, ce taux est vérifié après une étape de solubilisation précipitation. Le produit PVDF g AM est alors extrudé sous vide pour permettre la dévolatilisation des espèces non gréffées.

Une structure tricouche est réalisée par compression à 220°C sous 1 bar d'une couche A PVDF g AM (épaisseur 500 µm) collée sur une couche B d'un mélange de (i) 50% en poids de Lotader® 8840 (épaisseur 100 µm) qui est un copolymère de l'éthylène et du méthacrylate de glycidyle de MFI 5 g/10min à 190°C sous 2, 16 kg ( 92% d'éthylène et 8% de méthacrylate de glycidyle en poids) et (ii) 50% de polyéthylène stamylex® 1016 F lui-même collé sur une couche C consitutée de PE Haute densité MS201 N (épaisseur 500 µm).

A t=0 une adhésion de 30 N/cm est mesurée à l'interface A/B et l'interface B/C n'est pas pelable. La structure est immergée dans de l'essence M15 à 60°C. Après 15 jours la structure ne présente aucune délamination et une force de 15 N/cm est mesurée à l'interface A/B. Après séchage 1 semaine à 60°C sous vide de la structure A/B/C la force de pelage entre A et B est de nouveau mesurée à 30N/cm.

### Exemple 5 : (comparatif) :

Préparation d'un mélange de poudre de PVDF (2000 gr) Kynar 720 avec de l'anhydride maléique (20g). Le mélange est réalisé dans un turbulat pendant 10 minutes. Le mélange est introduit dans un sac étanche scellé. La fermeture étanche du sac est réalisée en ayant pris soin de chasser le plus possible l'air du sac. L'étanchéité du sac est vérifiée car ni air ni poussière ne doit pouvoir s'échapper du sac. Une irradiation béta est réalisée sous 6 Mrad béta, 10 MeV. La poudre analysée en infra rouge après étuvage 1 nuit sous 130°C présente un taux de greffage inférieur à la limite de détection <0,05%. L'anhydride maléique n'est pas greffé en extrême surface de la poudre du PVDF.

### Exemple 6 : (selon l'invention)

On prépare un mélange de PVDF kynar 720 de la société ATOFINA et de 0,5% en masse d'anhydride maléique. Ce mélange est préparé en utilisant une extrudeuse bi vis à 230°C et 150 tr/minute à un débit de 10 kg/h. Après l'étape d'extrusion 0,45% d'anhydride maléique reste dans le produit. Le reste étant perdu lors de l'étape d'extrusion. Le produit ainsi préparé et ensaché dans des sacs étanches en aluminium. Ces sacs sont ensuite irradiés sous 3 Mrad. Un taux de greffage de 50 % est déterminé, ce taux est vérifié après une étape de solubilisation précipitation. Le produit PVDF g AM est alors placé sous vide pendant une nuit à 130°C pour évacuer l'anhydride maléique résiduel et l'acide fluorhydrique libéré lors de l'irradiation.

Une structure cinq couches est réalisée par compression à 220°C sous 1 bars, de structure C/B/A/B/C, avec la couche A constituée de PVDF g AM (épaisseur 200 µm), la couche B d'un mélange de (i) 50% en poids de Lotader® 8840 (épaisseur 100 µm) qui est un copolymère de l'éthylène et du méthacrylate de glycidyle de MFI 5 g/10min à 190°C sous 2, 16 kg ( 92% d'éthylène et 8% de méthacrylate de glycidyle en poids) et (ii) 50% de polyéthylène stamylex® 1016 F et la couche C consitutée de PE Haute densité MS201 N (1000 µm).

A t=0 une adhésion de 70 N/cm est mesurée à l'interface A/B et l'interface B/C n'est pas pelable. La structure est immergée dans de l'essence M15 à 60°C. Après 22 jours la structure ne présente aucune délamination et une force de 20 N/cm est mesurée à l'interface A/B. Après séchage 1 semaine à 60°C sous vide de la structure C/B/A/B/C la force de pelage entre A et B est de nouveau mesurée à 70 N/cm.

### Exemple 7 : (selon l'invention)

On prépare un mélange de PVDF kynar 720 de la société ATOFINA et de 2% en masse d'anhydride maléique. Ce mélange est préparé en utilisant une extrudeuse bi vis à 230°C et 150 tr/minute à un débit de 10 kg/h. Après l'étape d'extrusion 1,8% d'anhydride maléique reste dans le produit. Le reste étant perdu lors de l'étape d'extrusion. Le produit ainsi préparé et ensaché dans des sacs étanches en aluminium. Ces sacs sont ensuite irradiés sous 3 Mrad. Un taux de greffage de 40 % est déterminé, ce taux est vérifié après une étape de solubilisation précipitation. Le produit PVDF g AM est alors extrudé sous vide pour permettre la dévolatilisation des espèces non greffées.

Une structure 3 couches est alors coextrudée constituée d'une couche A PVDF g AM (épaisseur 150 µm) collée sur une couche B d'un mélange de (i) 50% en poids de Lotader® 8840 (épaisseur 50 µm) qui est un copolymère de l'éthylène et du méthacrylate de glycidyle de MFI 5 g/10min à 190°C sous 2, 16 kg ( 92% d'éthylène et 8% de méthacrylate de glycidyle en poids) et (ii) 50% de polyéthylène stamylex® 1016 F lui-même collé sur une couche C consitutée de PE Haute densité 2040 ML55 (épaisseur 800 µm).

A t=0 une adhésion de 30 N/cm est mesurée à l'interface A/B et l'interface B/C n'est pas pelable. La structure est immergée dans de l'essence M15 à 60°C. Après 15 jours la structure ne présente aucune délamination et une force de 15 N/cm est mesurée à l'interface A/B. Après séchage 1 semaine à 60°C sous vide de la structure A/B/C la force de pelage entre A et B est de nouveau mesurée à 30N/cm.

## Revendications

1. - Procédé de greffage d'un monomère insaturé sur un polymère fluoré dans lequel :
a) on mélange le polymère fluoré à l'état fondu avec le monomère insaturé,
b) le mélange obtenu en a) est mis sous forme de films, de plaques, de granulés ou de poudre,
c) les produits de l'étape b) sont soumis, en l'absence d'air, à une irradiation photonique (γ) ou électronique (β) sous une dose comprise entre 1 et 15 Mrad,
d) le produit obtenu en c) est éventuellement traité pour éliminer tout ou partie du monomère insaturé qui n'a pas été greffé sur le polymère fluoré.

2. - Procédé selon la revendication 1 dans lequel le polymère fluoré est le PVDF.

3. - Procédé selon la revendication 2 dans lequel le PVDF contient au moins 85% en poids de VDF.

4. - Procédé selon l'une quelconque des revendications précédentes dans lequel le monomère insaturé est l'anhydride maléique.

5. - Procédé selon l'une quelconque des revendications précédentes dans lequel la proportion de polymère fluoré est, en poids, de 90 à 99,9% pour respectivement 0,1 à 10% de monomère insaturé.

6. - Procédé selon la revendication 5 dans lequel la proportion de polymère fluoré est de 95 à 99,9% pour respectivement 0,1 à 5% de monomère insaturé.

7. - Procédé selon l'une quelconque des revendications précédentes dans lequel la dose d'irradiation est comprise entre 2 et 6 Mrad.

## Claims

1. Process for grafting an unsaturated monomer onto a fluoropolymer, in which:
a) the fluoropolymer is melt blended with the unsaturated monomer;
b) the blend obtained in a) is made in the form of films, sheets, granules or powder;
c) the products from step b) are exposed, in the absence of air, to photon (γ) or electron (β) irradiation with a dose of between 1 and 15 Mrad; and
d) the product obtained at c) is optionally treated in order to remove all or part of the unsaturated monomer that has not been grafted onto the fluoropolymer.

2. Process according to Claim 1, in which the fluoropolymer is PVDF.

3. Process according to Claim 2, in which the PVDF contains at least 85% VDF by weight.

4. Process according to any one of the preceding claims, in which the unsaturated monomer is maleic anhydride.

5. Process according to any one of the preceding claims, in which the proportion of fluoropolymer is, by weight, from 90 to 99.9% for 0.1 to 10% of unsaturated monomer, respectively.

6. Process according to Claim 5, in which the proportion of fluoropolymer is from 95 to 99.9% for 0.1 to 5% of unsaturated monomer, respectively.

7. Process according to any one of the preceding claims, in which the irradiation dose is between 2 and 6 Mrad.

## Patentansprüche

1. Verfahren zum Pfropfen eines ungesättigten Monomers auf ein fluoriertes Polymer, worin:
a) das fluorierte Polymer im geschmolzenen Zustand mit dem ungesättigten Monomer vermischt wird,
b) das in a) gebildete Gemisch in die Form von Folien, Platten, Granulat oder Pulver gebracht wird,
c) die in b) erhaltenen Produkte unter Luftabschluss mit einer Dosis zwischen 1 und 15 Mrad Photonenstrahlung (γ) oder Elektronenstrahlung (β)ausgesetzt werden,
d) das in c) erhaltene Produkt gegebenenfalls behandelt wird, um ungesättigtes Monomer, das nicht auf das fluorierte Polymer gepfropft wurde, ganz oder teilweise zu entfernen.

2. Verfahren nach Anspruch 1, wobei das fluorierte Polymer das PVDF ist.

3. Verfahren nach Anspruch 2, wobei das PVDF zumindest 85 Gew.-% VDF enthält.

4. Verfahren nach einem der vorhergehenden Ansprüche, wobei es sich bei dem ungesättigten Monomer um Maleinsäureanhydrid handelt.

5. Verfahren nach einem der vorhergehenden Ansprüche, wobei der Anteil des fluorierten Polymers auf das Gewicht bezogen 90 bis 99,5 % auf 0,1 bis 10 % ungesättigtes Monomer beträgt.

6. Verfahren nach Anspruch 5, wobei der Anteil des fluorierten Polymers auf das Gewicht bezogen 95 bis 99,5 % auf 0,1 bis 5 % ungesättigtes Monomer beträgt.

7. Verfahren nach einem der vorhergehenden Ansprüche, wobei die Bestrahlungsdosis zwischen 2 und 6 Mrad liegt.
